# EUROPEAN PATENT APPLICATION

(11) **EP 4 187 902 A2**
(43) Date of publication of application: **31.05.2023**
(21) Application number: 22209561.4
(22) Date of filing: 25.11.2022
(51) Int. Cl.: H04N 13/178, H04N 13/122, H04N 13/218

(54) **IMAGE PROCESSING APPARATUS, IMAGING APPARATUS, AND IMAGE PROCESSING METHOD**

(30) Priority: 26.11.2021 JP 2021192588
(71) Applicant: Canon Kabushiki Kaisha, Ohta-ku Tokyo 146-8501 (JP)
(72) Inventor: ITO, Hiroki, Tokyo, 146-8501 (JP); TERADA, Shuichi, Tokyo, 146-8501 (JP); UEHARA, Takumi, Tokyo, 146-8501 (JP)
(74) Representative: TBK

(57) **Abstract**

An image processing apparatus performs processing on a captured image generated by imaging. The image processing apparatus includes an acquiring unit (117), a generating unit (117), and an adding unit (113). The acquiring unit (117) is configured to acquire information on an imaging apparatus used in the imaging. The generating unit (117) is configured to generate an information image as an image including the information on the imaging apparatus. The adding unit (113) is configured to add the information image to the captured image and to record the captured image to which the information image is added.

## Description

### BACKGROUND OF THE INVENTION

### Field of the Invention

The present disclosure relates to a technique for performing image processing on a captured image.

### Description of the Related Art

Japanese Patent No. ("JP") 5166650 discloses an imaging apparatus that captures, with an image sensor, object images respectively formed by two optical systems arranged on left and right and generates stereoscopic captured images for a left eye and a right eye. JP 5166650 also discloses that good stereoscopic vision can be realized by recording information on deviations of optical axes of the two optical systems, on an aberration of each optical system, and the like, in an image file together with the captured image and performing, in a later process, correction processing on the captured image using the information.

However, in a case where information is written in an image file together with a captured image as in the imaging apparatus disclosed in JP 5166650, the information may be lost in processes of performing various processing other than correction processing on the captured image.

### SUMMARY OF THE INVENTION

The present disclosure provides an image processing apparatus and the like each of which can stably store information used for image processing on a captured image.

The present invention in its first aspect provides an image processing apparatus as specified in claims 1 to 13.

The present invention in its second aspect provides an imaging apparatus as specified in claim 14.

The present invention in its third aspect provides an image processing method as specified in claim 15.

The present invention in its fourth aspect provides a computer program as specified in claim 16.

Further features of the embodiments of the present disclosure will become apparent from the following description of exemplary embodiments with reference to the attached drawings.

### BRIEF DESCRIPTION OF THE DRAWINGS

FIG. 1 is a sectional view of a stereo imaging lens according to a first embodiment.
FIG. 2 is a block diagram illustrating a configuration of an imaging apparatus according to the first embodiment.
FIG. 3 is a flowchart illustrating imaging processing according to the first embodiment.
FIG. 4 is a diagram illustrating a first example of a captured image according to the first embodiment.
FIG. 5 is a diagram illustrating a second example of the captured image according to the first embodiment.
FIG. 6 is a diagram illustrating a third example of the captured image according to the first embodiment.
FIG. 7 is a diagram illustrating a fourth example of the captured image according to the first embodiment.
FIG. 8 is a diagram illustrating a fifth example of the captured image according to the first embodiment.
FIGs. 9A and 9B are diagrams illustrating a sixth example of the captured image according to the first embodiment.
FIG. 10 is a diagram illustrating a projection method according to the first embodiment.
FIG. 11 is a diagram illustrating an example of a converted image according to the first embodiment.
FIG. 12 is a flowchart illustrating image converting processing according to the first embodiment.
FIG. 13 is a flowchart illustrating output image generating processing according to a second embodiment.
FIG. 14 is a flowchart illustrating image converting processing according to a third embodiment.
FIG. 15 is a flowchart illustrating imaging processing according to a fourth embodiment.
FIG. 16 is a diagram illustrating an example of a converted image according to the fourth embodiment.
FIG. 17 is a flowchart illustrating imaging processing according to a fifth embodiment.

### DESCRIPTION OF THE EMBODIMENTS

Referring now to the accompanying drawings, a description is given of embodiments according to the present disclosure.

### FIRST EMBODIMENT

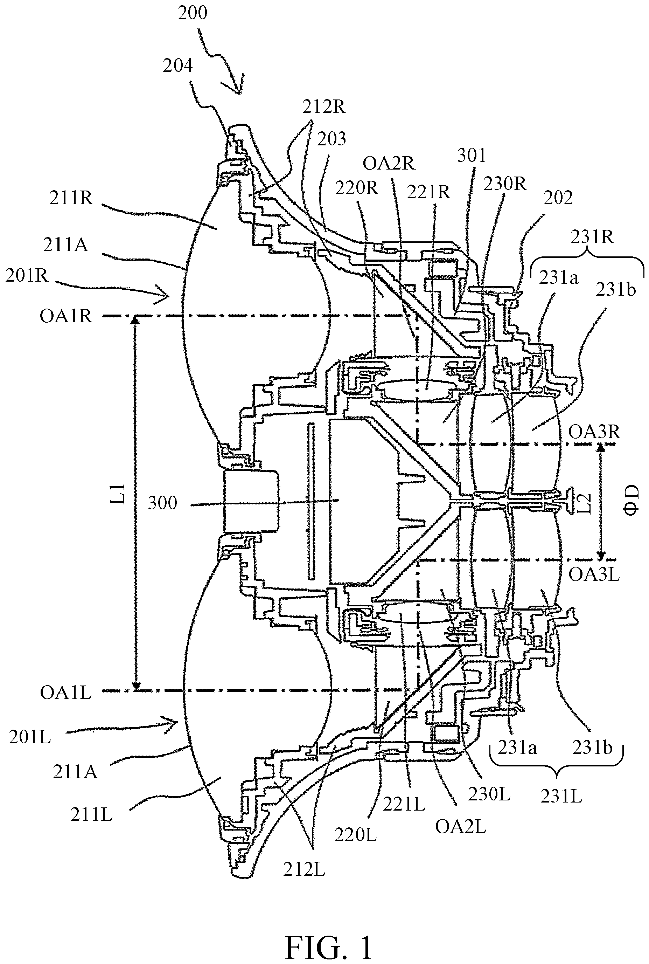

FIG. 1 illustrates a section of a stereo imaging lens (hereinafter simply referred to as an imaging lens) 200 that is detachably (interchangeably) attachable to a camera body that is a body of a lens-interchangeable type imaging apparatus according to the first embodiment of the present disclosure. In FIG. 1, a left side is an object side (front side) and a right side is an image side (rear side). The imaging lens 200 may be included in a lens-integrated type imaging apparatus.

The imaging lens 200 includes a right-eye optical system 201R as a first optical system and a left-eye optical system 201L as a second optical system. The right-eye optical system 201R and the left-eye optical system 201L are circular fisheye lenses each of which has an angle of view of 180° or more, and are arranged in parallel in a left-right direction (vertical direction of FIG. 1). Alternatively, the first optical system and the second optical system may be arranged in parallel in a vertical direction (depth direction of FIG. 1). In the following description, R is attached to an end of a reference numeral of each element included in the right-eye optical system 201R, and L is attached to an end of a reference numeral of each element included in the left-eye optical system 201L.

The right-eye and left-eye optical systems 201R and 201L respectively include, in order from the object side to the image side, first lens units 211R and 211L, second lens units 221R and 221L, and third lens units 231R and 231L. Each lens unit includes one or more lenses.

The first lens units 211R and 211L have first optical axes OA1R and OA1L, respectively. The first optical axes OA1R and OA1L are away from each other in the left-right direction by a distance (inter-optical axis distance) L1. The distance L1 is also referred to as a base length. Each of the first lens units 211R and 211L has a convex front lens surface 211A on its object side, and thereby each of the right-eye and left-eye optical systems 201R and 201L have an angle of view of 180° or more.

The second lens units 221R and 221L respectively have second optical axes OA2R and OA2L extending orthogonally to the first optical axes OA1R and OA1L in the left-right direction.

The third lens units 231R and 231L respectively have third optical axes OA3R and OA3L extending orthogonally to the second optical axes OA2R and OA2L (parallelly to the first optical axes OA1R and OA1L). Each third lens unit includes a front lens 231a and a rear lens 231b arranged in order from the object side to the image side. The third optical axes OA3R and OA3L are away from each other in the left-right direction by a distance (narrow inter-optical axis distance) L2 shorter than the base length L1. In the following description, the direction in which the first optical axes OA1 (R and L) and the third optical axes OA3 (R and L) extend is referred to as an optical axis direction.

Between the first lens units 211R and 211L and the second lens units 221R and 221L, first prisms 220R and 220L are respectively disposed as reflective members that bend, toward the second lens units 221R and 221L, optical paths of light having passed through the first lens units 211R and 211L. Between the second lens units 221R and 221L and the third lens units 231R and 231L, second prisms 230R and 230L are respectively disposed as reflective members that bend, toward the third lens units 231R and 231L, optical paths of light having passed through the second lens units 221R and 221L.

The right-eye and left-eye optical systems 201R and 201L are held by lens holding members 212R and 212L, accommodated inside an exterior cover member 203, and fixed to a lens top base 300 with a screw. The lens top base 300 is fixed with a screw to a lens bottom base 301 disposed inside the exterior cover member 203. A linear guide portion provided on the exterior cover member 203 holds the lens bottom base 301 so that the lens bottom base 301 is movable in the optical axis direction while limiting a rotation of the lens bottom base 301. Thereby, the right-eye and left-eye optical systems 201R and 201L can adjust focus by moving with the lens top base 300 and the lens bottom base 301 as a whole in the optical axis direction. A lens mount 202 is fixed with a screw to a rear end of the exterior cover member 203.

A front exterior member 204 is fixed with a screw or adhesive to a front end of the exterior cover member 203. The front exterior member 204 includes two openings that expose front lens surfaces 211A of the first lens units 211R and 211L of the right-eye and left-eye optical systems 201R and 201L.

The imaging lens 200 having the configuration described above enables imaging for acquiring a stereoscopic image (a right-eye image and a left-eye image as parallax images having parallax) with an angle of view of 180° or more. An observer views the stereoscopic image as a VR image through VR goggles or the like.

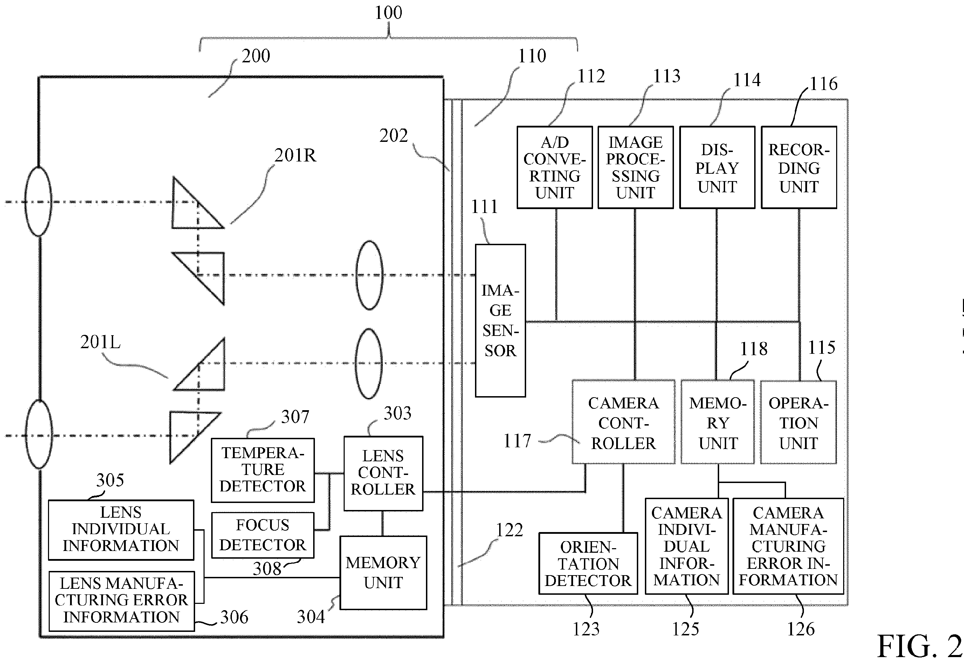

FIG. 2 illustrates an internal configuration of a stereo imaging apparatus (hereinafter simply referred to as an imaging apparatus) 100 including the imaging lens 200 and the camera body 110 to which the imaging lens 200 is attached. The lens mount 202 of the imaging lens 200 is connected to a camera mount 122 of the camera body 110 so that the imaging lens 200 and the camera body 110 are mechanically and electrically communicatively connected.

The imaging lens 200 uses a right-eye optical system 201R and a left-eye optical system 201L, which are imaging optical systems, to form two object images (image circles) in left and right areas on an imaging surface of an image sensor 111 in the camera body 110. The imaging lens 200 includes a temperature detector 307 and a focus detector 308. The focus detector 308 includes a position sensor of magnetic, optical, resistive, or the like, and detects focus positions (positions of the optical systems 201R and 201L in the optical axis direction). In response to a request from the camera controller 117 in the camera body 110, a lens controller 303 transmits, to the camera controller 117, information indicating (or including) information on temperature and focus position detected by the detectors 307 and 308 (hereinafter also referred to as temperature information and focus position information).

The imaging lens 200 includes a memory unit 304. The memory unit 304 includes a memory device such as a ROM and a RAM, and stores lens individual information 305 and lens manufacturing error information 306. The lens controller 303 transmits the lens individual information 305 and the lens manufacturing error information 306 to the camera controller 117 in response to a request from the camera controller 117. The lens individual information 305 and the lens manufacturing error information 306 are information on the imaging lens 200 in the imaging apparatus 100, and the details thereof are described below. In the following description, the lens individual information 305 and the lens manufacturing error information 306 are also collectively referred to as lens individual identification information.

In the camera body 110, the image sensor 111 includes a photoelectric conversion element such as a CCD sensor and a CMOS sensor, and photoelectrically converts (images) an object image formed on its imaging surface. The camera controller 117 includes a computer such as a CPU and controls the entire imaging apparatus 100.

The camera body 110 further includes an A/D converting unit 112, an image processing unit 113, a display unit 114, an operation unit 115, a recording unit 116, a memory unit 118, and an orientation detector 123. The A/D converting unit 112 converts an analog imaging signal output from the image sensor 111 into a digital imaging signal. The image processing unit 113 includes a computer, such as a CPU, and generates image data (captured image) by performing various image processing on the digital imaging signal. A captured image is an area including a captured object (main object or background), that is, an image including an object image. The image processing unit 113 also performs image converting processing on the captured image acquired by using the imaging lens 200, which is fisheye lenses, as image processing for providing a good stereoscopic view to a user.

The display unit 114 includes a liquid crystal panel or an organic EL panel and displays images and various information. The user operates the operation unit 115 to input an instruction to the imaging apparatus 100. In a case where the display unit 114 includes a touch sensor, the touch sensor is also included in the operation unit 115. The recording unit 116 records various data such as image data generated by the image processing unit 113 in a recording medium (flash memory, hard disk, etc.) or memory on cloud.

The orientation detector 123 includes an acceleration sensor, a gyro sensor, or the like, detects an orientation of the camera body 110 at a start of imaging and a change in the orientation during imaging (camera shake, etc.), and transmits information thereof to the camera controller 117.

The memory unit 118 includes a memory device such as a ROM and a RAM, and stores camera individual information 125 and camera manufacturing error information 126. The camera individual information 125 and the camera manufacturing error information 126 are information on the camera body 110 of the imaging apparatus, and the details thereof are described later. In the following description, the camera individual information 125 and the camera manufacturing error information 126 are also collectively referred to as camera individual identification information.

The camera controller 117 reads the camera individual identification information from the memory unit 118 in imaging and generates an information image including the camera individual identification information, the lens individual identification information received from the lens controller 303, the temperature information, the focus position information, and information on the orientation of the camera body 110 (hereinafter also referred to as orientation information). The information image is a one-dimensional barcode, a two-dimensional barcode, a digit string, luminance information corresponding to a recorded bit number of the captured image, or the like. For example, the luminance information corresponding to the recorded bit number is as follows. When the information image is to be recorded, in a case where a recorded image has an 8-bit for each pixel of the image, information on luminance of 256 gradations can be recorded, and thus the information on the 256 gradations is expressed in an image of an area assigned to the information image. As a result, when the image is read later, 8-bit information can be acquired per pixel.

The generated information image is transmitted to the image processing unit 113. The image processing unit 113 generates an image to be recorded, by adding (combining) the information image to the captured image and records the image to be recorded on the recording medium through the recording unit 116. The camera controller 117 corresponds to an acquiring unit and a generating unit, and the image processing unit 113 corresponds to an adding unit and a processing unit.

The memory unit 118 also stores programs for the camera controller 117 and the image processing unit 113 to execute control and processing.

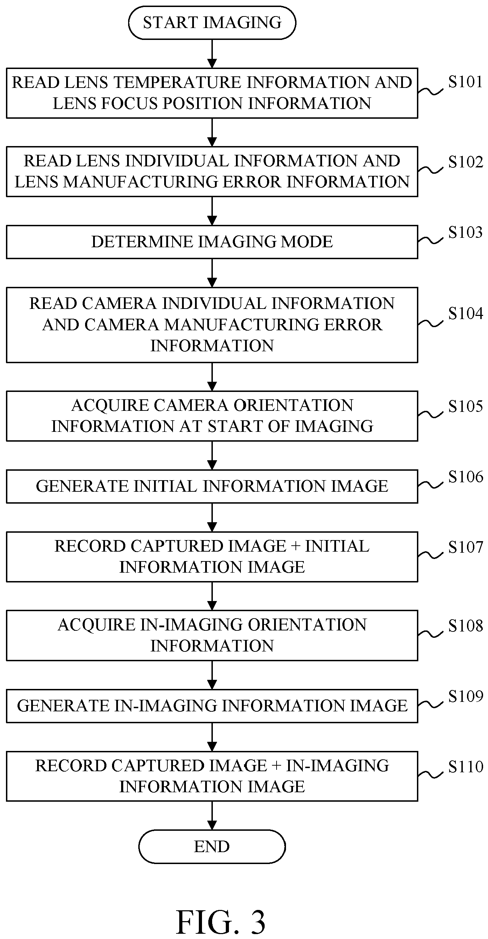

The flowchart in FIG. 3 illustrates processing (image processing method) executed by the camera controller 117 from a start to an end of imaging. The camera controller 117 executes this processing according to a program.

When the user performs an imaging start operation on the camera body 110, the camera controller 117 acquires the temperature information and the focus position information from the lens controller 303 in step S101.

The temperature information is acquired for the following reason. Lens manufacturing error information 306, which is to be acquired by the camera controller 117 from the lens controller 303 in the next step, includes a manufacturing error at a temperature in a manufacturing process of the imaging lens 200 written in the memory unit 304. The magnitude (error amount) of this manufacturing error may change depending on a temperature in an environment where the imaging apparatus 100 is used (using environment), and therefore acquiring an accurate error amount at the temperature in the using environment enables proper image converting processing to be performed on the captured image.

The focus position information is acquired for the following reason. Each fisheye lens included in the imaging lens 200 has a configuration close to a deep focus lens, and basically focuses on an object at a short distance to an object at a long distance. However, in a case where an object at a specific distance is to be accurately focused on, in a case where an aperture value with a small f-number is set, or in a case where the camera body 110 has a manufacturing error (such as an error in attachment of the image sensor 111), defocus may occur. Therefore, focus of the imaging lens 200 is to be adjusted. Acquiring the focus position information makes it possible to acquire information on a distance to an object that the user wishes to image and optical information on the right-eye and left-eye optical systems 201R and 201L corresponding to the focus position. For example, aberration such as distortion aberration of the right-eye and left-eye optical systems 201R and 201L may change depending on the focus position. Hence, by acquiring information on aberration corresponding to the focus position, distortion in an image can be properly corrected during the image converting processing on the captured image.

Next, in step S102, the camera controller 117 acquires the lens individual identification information (lens individual information 305 and lens manufacturing error information 306) stored in the memory unit 304 through the lens controller 303. The lens individual information 305 includes information on optical design of (optical design information on) the imaging lens 200. For example, the base length L1 between the right-eye and left-eye optical systems 201R and 201L is set to a distance close to a human interpupillary distance so that proper parallax can be provided when the user stereoscopically views the image. The base length L1 corresponds to a distance between principal points (inter-principal point distance) of the right-eye and left-eye optical systems 201R and 201L. Therefore, the lens individual information 305 includes information on inter-principal point distance.

The right-eye and left-eye optical systems 201R and 201L bend the optical paths by using the first prisms 220R and 220L and the second prisms 230R and 230L. This makes it shorter, than the base length L1, a distance between the centers (inter-center distance) of the left and right image circles formed on the image sensor 111 by the right-eye and left-eye optical systems 201R and 201L (that is, a distance L2 between the third optical axes OA3R and OA3L). The width of a general full-size image sensor is about 36 mm, and thus two image circles on the left and right are to be formed inside the image sensor with the inter-center distance of about 18 mm or less. Since the inter-center distance of the image circles is significantly different from an interpupillary distance of human eyes (approximately 65 mm on average), a design value of the distance L2 is to be identified for when the image converting processing is performed. Therefore, the lens individual information 305 also includes the information on the distance L2.

The actual right-eye and left-eye optical systems 201R and 201L include manufacturing errors with respect to design values. Therefore, the lens manufacturing error information 306 on each individual acquired in a manufacturing process of the imaging lens 200 is also to be used in the image converting processing. Due to an assembly error or a component tolerance occurring in the manufacturing process of the imaging lens 200, it is not perfectly ensured that the optical axes of the right-eye and left-eye optical systems 201R and 201L are parallel, and the optical axes are not perfectly parallel. As a result, the positions of the centers and the inter-center distance of the left and right image circles on the image sensor 111 deviate from design values. If there is a manufacturing error in distances between the lenses and prisms included in each optical system, the focal length and a distortion rate may deviate from design values. Therefore, if these manufacturing errors are identified when the image converting processing is performed, proper image converting processing can be performed. Further acquiring the change in the manufacturing error depending on the temperature makes it possible to perform proper image converting processing irrespective of the temperature.

Next, in step S103, the camera controller 117 determines whether an imaging mode set by the user in the camera body 110 is an imaging mode for still images or an imaging mode for moving images. In the following description, a description is given of a case where the imaging mode for moving images is set.

Next, in step S104, the camera controller 117 acquires camera individual identification information (camera individual information 125 and camera manufacturing error information 126) from the memory unit 118. The camera individual information 125 includes information on a model of the camera body 110 and information on a physical size, an imaging area size, the number of pixels, a pixel pitch, and the like of the image sensor 111. At this time, the camera controller 117 acquires the imaging area size and the number of pixels of the image sensor 111 corresponding to the imaging mode determined in step S103. This is because, between imaging of a still image and imaging of a moving image, the imaging area size and the number of pixels may be different.

The camera manufacturing error information 126 is acquired in a manufacturing process of the camera body 110 as information on each individual of camera body 110 and written in the memory unit 118. The camera manufacturing error information 126 includes information indicating (including) an error in the attachment of the image sensor 111 to the camera body 110 (positional deviation and tilt of the image sensor 111 relative to the camera mount 122) and information such as color and luminance of the image sensor 111.

Next, in step S105, the camera controller 117 acquires orientation information on the camera body 110 at the start of imaging from the orientation detector 123. The orientation information is also used so that proper image converting processing is performed.

Next, in step S106, the camera controller 117 generates an initial information image (first information image) by performing processing for converting, into an image, the lens individual identification information, the camera individual identification information, the temperature information, the focus position information, and the orientation information, each of which has been acquired by this step.

In step S107, the camera controller 117 transmits the generated initial information image to the image processing unit 113 that has generated a first frame image as the captured image, and causes the image processing unit 113 to generate a first frame image to be recorded by causing the image processing unit 113 to add the initial information image to the first frame image. Then, the first frame image to be recorded is recorded on the recording medium through the recording unit 116.

Next, in step S108, the camera controller 117 acquires, through the orientation detector 123, the orientation information on the camera body 110 that changes during imaging the moving image. A change in the orientation during imaging the moving image occurs when, for example, the user takes an image while holding the camera body 110 by hand.

Next, in step S109, when the orientation of the camera body 110 changes from the orientation in the first frame, the camera controller 117 generates an in-imaging information image (second information image) in which the orientation information is updated with respect to the initial information image. Also in the subsequent process, the camera controller 117 generates an in-imaging information image in which orientation information is updated every unit frame or every time the orientation changes.

In step S110, the camera controller 117 generates a subsequent frame image to be recorded by adding the updated in-imaging information image to a frame image corresponding to that in-imaging information image among the subsequent frame images sequentially generated after the first frame image.

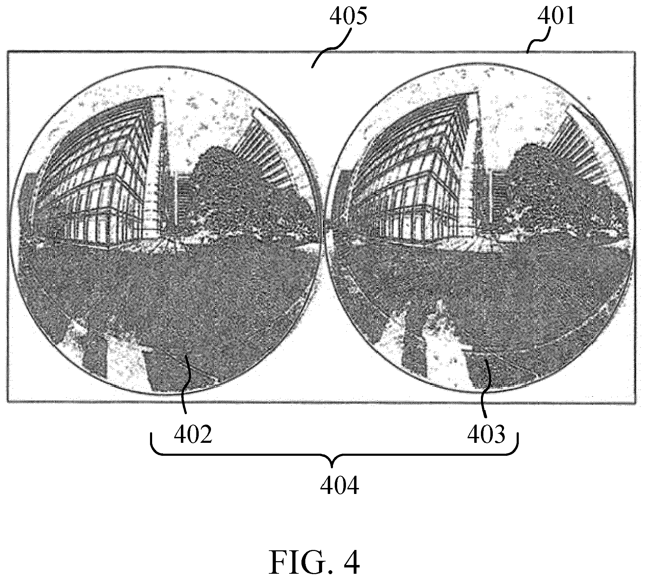

Next, a description is given of a method of adding the information image to the captured image. FIG. 4 illustrates a captured image 401 generated by the imaging apparatus 100 according to this embodiment imaging an object (cityscape). As described above, the right-eye and left-eye optical systems 201R and 201L are circular fisheye lenses, and the captured image 401 is an image in which circular fisheye images 402 and 403 as object images are arranged side by side on the left and right.

The object image formed on the image sensor 111 by each optical system is an inverted image, and therefore the image processing unit 113 performs inverting processing on the captured image. In the inverting processing, inversion is performed point-symmetrically about the center of the captured image 401 (image sensor 111). Hence, in a case where the imaging lens 200 according to this embodiment is used, a captured image is generated in which the circular fisheye image 402 corresponding to the right-eye optical system 201R is positioned on the left, and the circular fisheye image 403 corresponding to the left-eye optical system 201L is positioned on the right (that is, the left and right are switched). The image converting processing is performed on the captured image later, and therefore the switching of the circular fisheye images 402 and 403 does not pose a problem.

The captured image 401 acquired by using the rectangular image sensor 111 includes an area including no object image (circular fisheye images 402 and 403) around the left and right circular fisheye images 402 and 403. In the following description, an area including an object image in the captured image 401 is referred to as a first area 404 and the area including no object image (that is, an area outside the first area) is referred to as a second area 405.

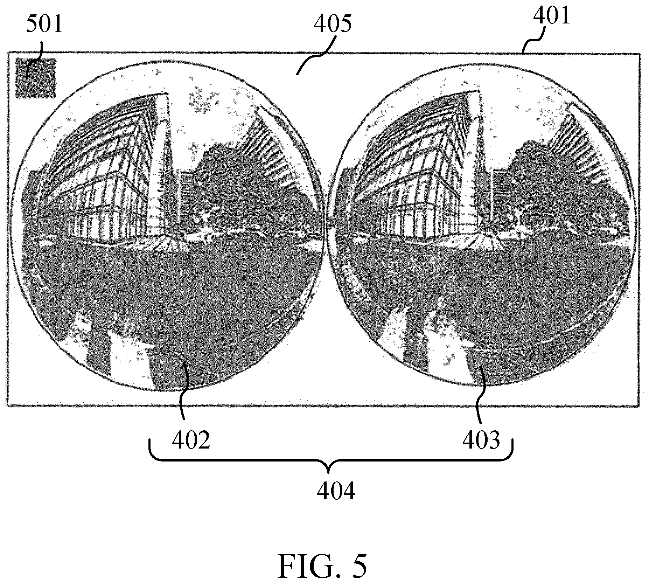

FIG. 5 illustrates an example in which a two-dimensional barcode as the above-described information image (initial information image and in-imaging information image) 501 is added (combined) to the second area 405 in the captured image 401. The second area 405 is not referred to in the image converting processing, even when information other than the object image is added there, the image converting processing is not affected.

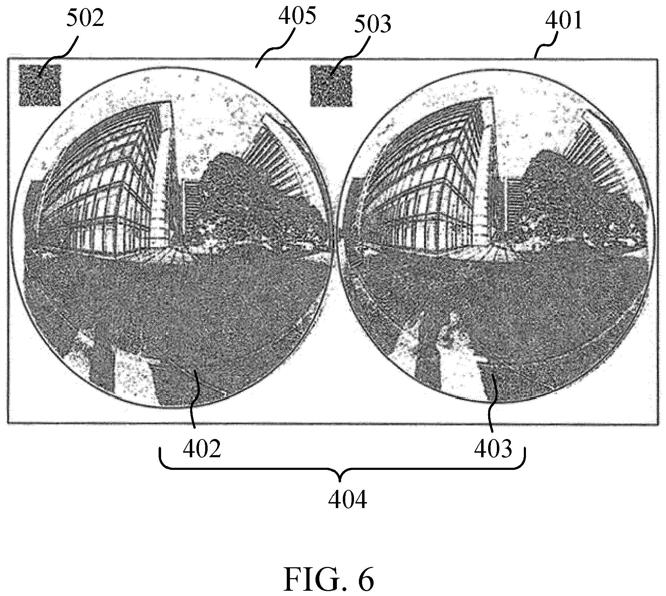

As described above, the information image includes the initial information image, which mainly includes information that does not change during imaging, and the in-imaging information image, which may change with time during imaging, such as the orientation. FIG. 6 illustrates an example in which an initial information image 502 and an in-imaging information image 503 are added separately to two locations in the second area 405.

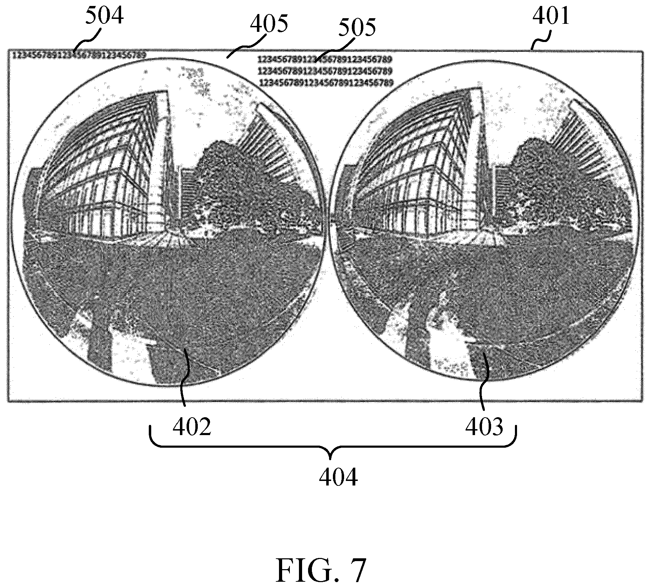

Alternatively, as described above, the information image may be a digit string. FIG. 7 illustrates an example in which an initial information image 504 and an in-imaging information image 505 as digit strings are added separately to two locations in the second area 405.

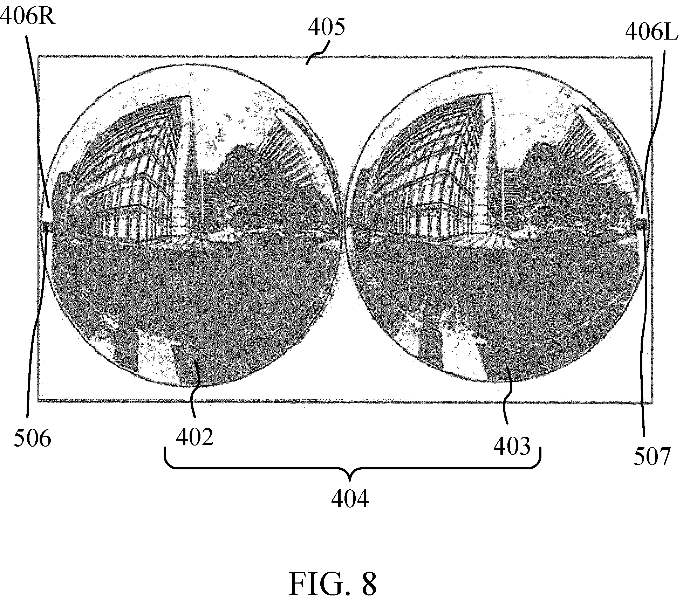

FIG. 8 illustrates an example in which an initial information image 506 and an in-imaging information image 507 are added to the first area 404 instead of the second area 405. Since each of the right-eye and left-eye optical systems 201R and 201L ensures an angle of view of 180° or more by having the front lens surface 211A of a convex surface as illustrated in FIG. 1, part of the left-eye optical system 201L is included in a left-end area 406R of the circular fisheye image 402 corresponding to the right-eye optical system 201R and part of the right-eye optical system 201R is included in a right-end area 406L of the circular fisheye image 403 corresponding to the left-eye optical system 201L. The areas 406R and 406L in the first area 404 including the optical systems, which are not objects, are not referred to in the image converting processing, the information images 506 and 507 may be added thereto.

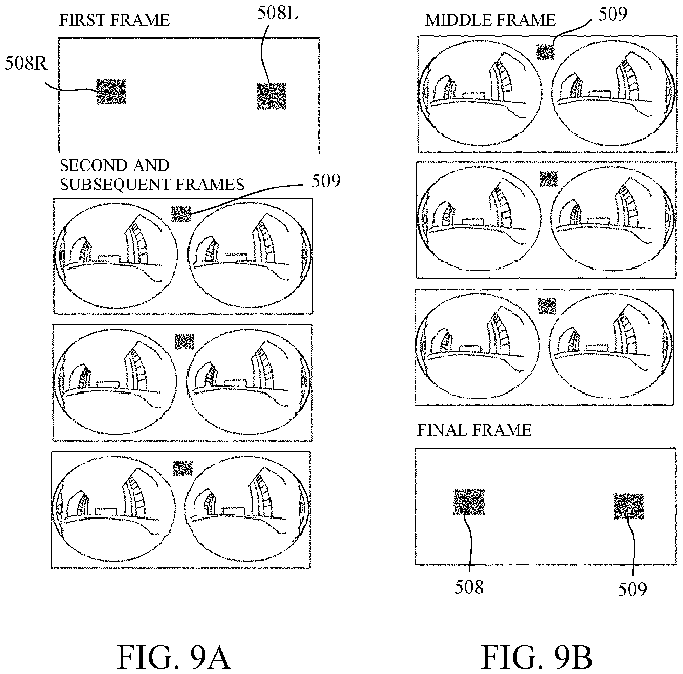

FIG. 9A illustrates an example in which initial information images 508R and 508L are added to a first frame image that does not include an object image (includes a second area only) among frame images sequentially generated in imaging a moving image. The initial information images 508R and 508L here are initial information images respectively corresponding to the right-eye and left-eye optical systems 201R and 201L. Each of subsequent frame images in the second and subsequent frames includes first and second areas, and an in-imaging information image 509 corresponding to each frame is added to each second area. Since the initial information images 508R and 508L are added to the first frame image, the initial information images 508R and 508L are recorded even in a case where imaging cannot be continued, such as a case where the camera body 110 is turned off in the middle of the imaging. Therefore, the information included in the initial information images 508R and 508L can be used in editing the moving image captured halfway. Since only the in-imaging information image 509 is added to the subsequent frame images and the initial information image 508R and 508L is not added thereto, it is possible to minimize the area to which the information image is added in each subsequent frame image.

FIG. 9B illustrates an example in which, in each middle frame image before a final frame image, first and second areas are included and an in-imaging information image 509 corresponding to the frame is added to the second area, and in the final frame image not including an object image, an initial information image 508 and an in-imaging information image 509 are added. In this example, the initial information image 508 cannot be recorded in a case where the imaging cannot be continued in the middle of imaging, but since an information image does not appear at the start of the captured moving image, it is possible to easily distinguish and classify, for example, what is imaged in the moving image, in later editing of the captured moving image. Also in this example, it is possible to minimize the area to which the information image is added in each middle frame image.

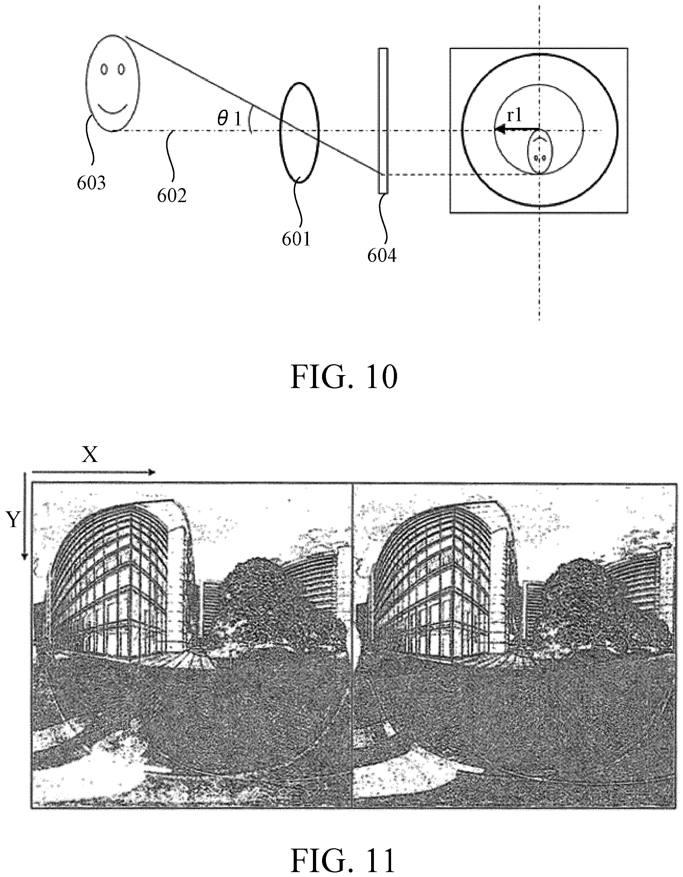

Next, a description is given of the image converting processing performed on the captured image. A captured image, which is a target of the image converting processing, includes a circular fisheye image as an object image and an information image. This embodiment adopts equidistant projection as a projecting method of the fisheye lens. In the equidistant projection, as illustrated in FIG. 10, an angle θ1 at which a fisheye lens 601 projects the object 603 (an angle between the position on the fisheye lens 601 and the optical axis 602) is almost proportional to a distance r1 from the center of the imaging surface 604 (optical axis 602) to the object 603.

The image processing unit 113 generates a converted image by performing mapping on the captured image generated by imaging using the equidistant projection, and the mapping is based on equirectangular projection as illustrated in FIG. 11. Specifically, a pixel in each azimuth in the captured image is plotted at a position proportional to the azimuth in an X direction in the converted image, and a pixel in each elevation angle (for example, θ1 in FIG. 10) is plotted at a position proportional to the elevation angle in a Y direction in the converted image.

A VR image displayed on a VR viewing device such as a head-mounted display is generally created using the equirectangular proj ection. The VR viewing device extracts an area (display area) to be displayed to the user from the VR image as a converted image, and converts the image in the display area into a perspective projection image. The display area is selected according to a direction that the user, who wears the VR viewing device, faces. This makes it possible to provide the user with an image view as in an external world observed in the real world.

However, since the right-eye and left-eye optical systems 201R and 201L and the image sensor 111 respectively have manufacturing errors with respect to the design values, in a case where the captured image is converted using the equirectangular projection without these manufacturing errors taken into account, a deviation and distortion occur in converted left and right images. For example, the images are converted into images in each of which a vertical building is distorted.

In a case where the left and right images deviate from each other in the vertical direction, the images observed by the user's left and right eyes are not fused as a good stereoscopic image, which makes the user get so-called VR sickness. In a case where the left and right images deviate from each other in the horizontal direction, the parallax is not correctly expressed when the user views the stereoscopic image with the left and right eyes, and the size of and distance to the object are different from those when the object is actually viewed with the eyes, which makes the user feel discomfort. Therefore, by performing proper correction using the above-described lens and camera manufacturing error information 306 and 126 in the image converting processing, it is possible to generate a VR image that is not likely to cause VR sickness or discomfort.

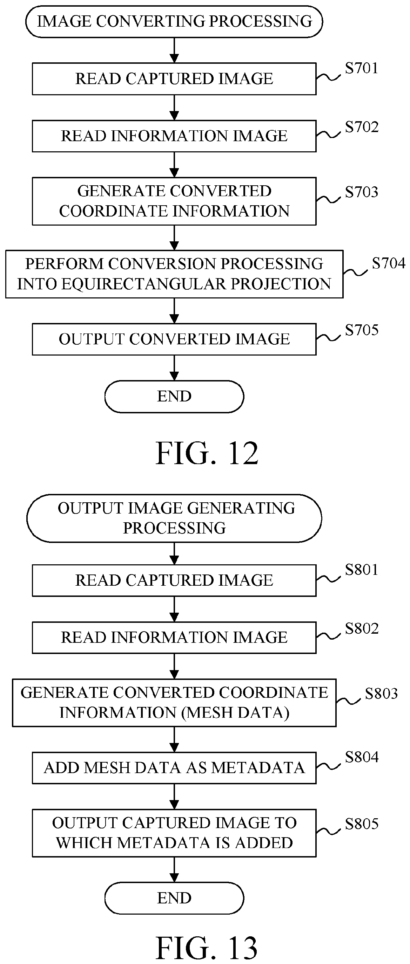

The flow chart of FIG. 12 illustrates the above-described image converting processing on the captured image into the VR image, which is executed by the image processing unit 113. The image processing unit 113 executes this processing according to an image conversion application (program).

In step S701, the image processing unit 113 reads, as a conversion target, a captured image generated from a digital imaging signal.

Next, in step S702, the image processing unit 113 reads information images (initial information image and in-imaging information image) added to the captured image.

Next, in step S703, the image processing unit 113 acquires lens individual identification information, camera individual identification information, temperature information, focus position information, and orientation information from the information image. The image processing unit 113 also acquires information on a position where the image was captured from a GPS device connected to the camera. From the acquired pieces of information, the image processing unit 113 acquires a deviation between center positions of the left and right image circles, distortion of the left and right object images caused by aberration, a difference between the left and right object images caused by a change in the orientation, and the like. Further, while correcting the deviation between the center positions, the distortion of the images, and the like, the image processing unit 113 generates information on converted coordinates (hereinafter also referred to as converted coordinate information) so as to perform image conversion using the equirectangular projection. Specifically, the image processing unit 113 generates the converted coordinate information by calculating coordinates after converting coordinates of all pixels in the object image (circular fisheye image) by equirectangular projection.

Next, in step S704, the image processing unit 113 generates a converted image (VR image) by converting the object image into an equirectangular projection image based on the converted coordinate information. In imaging a moving image, the image processing unit 113 performs this image conversion for each frame image.

Next, in step S705, the image processing unit 113 outputs the VR image so as to cause the recording unit 116 to record the VR image on a recording medium or so as to cause a VR viewing device to display the VR image.

According to this embodiment, since an information image added to a captured image includes information to be used in image converting processing, even in a case such that metadata of the captured image is lost, the image converting processing into a VR image can be performed by using the information image. That is, it is possible to stably store information used in processing on the captured image.

### SECOND EMBODIMENT

In the first embodiment, a description is given of a case where the image processing unit 113 performs the image converting processing as image processing on a captured image by using an information image, but image processing other than the image converting processing may be performed.

The flowchart in FIG. 13 illustrates output image generating processing as image processing executed by the image processing unit 113 according to the second embodiment. Steps S801 and S802 are the same as steps S701 and S702 in FIG. 12.

In step S803, the image processing unit 113 generates converted coordinate information as mesh data from the information image read in step S802. When an area with an angle of view of about 180° in this embodiment is regarded as a hemispherical dome, the converted coordinate information is coordinate information (mesh data) on intersections of meshes on the dome divided by 20 vertical meshes × 20 horizontal meshes, 40 vertical meshes × 40 horizontal meshes, 80 vertical meshes × 80 horizontal meshes, or the like.

Next, in step S804, the image processing unit 113 adds, as metadata, the mesh data generated in step S803 to the captured image read in step S801. The captured image to which the mesh data as metadata is added is displayed as a VR image by a VR viewing device that supports a format of the captured image.

### THIRD EMBODIMENT

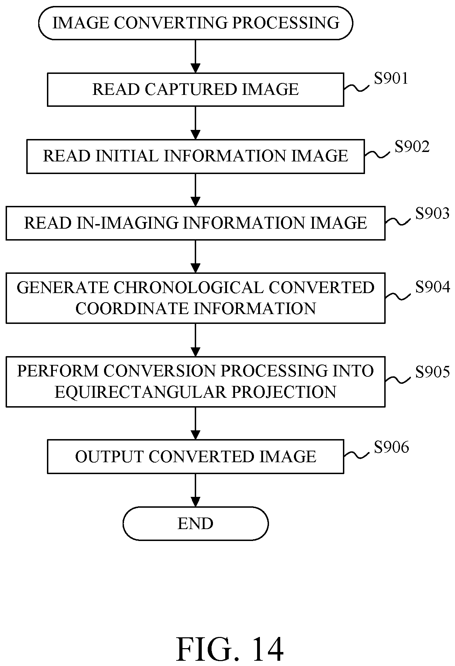

The flowchart in FIG. 14 illustrates image converting processing according to the third embodiment for chronologically generating converted coordinate information, and the processing is executed by the image processing unit 113. Step S901 is the same as step S701 in FIG. 12.

In step S902, the image processing unit 113 reads the initial information image added to the captured image. Subsequently, in step S903, the image processing unit 113 reads the in-imaging information image added to the captured image. For example, by adding the initial information image and the in-imaging information image to separate positions in the captured image as illustrated in FIGs. 6 to 9B, the initial information image and the in-imaging information image can be read from the respective positions in a chronological manner.

Next, in step S904, the image processing unit 113 generates chronological converted coordinate information in which manufacturing errors and the like are corrected by using the initial information image read in step S902 and camera shake, a change in the orientation, and the like during imaging are corrected by using the in-imaging information image read in step S903.

Next, in step S905, the image processing unit 113 generates a converted image by converting the object image into an equirectangular projection image based on the chronological converted coordinate information. By using the chronological converted coordinate information, proper image conversion can be performed while information that chronologically changes is reflected. In imaging a moving image, this image conversion is performed for each frame image.

The next step S906 is the same as step S705 in FIG. 12.

As described in the second embodiment (FIG. 13), this embodiment may generate a captured image to which mesh data as metadata is added without performing image conversion on the captured image. At this time, the image processing unit 113 may add mesh data that changes according to information that chronologically changes such as the orientation, or may add data acquired by adding the orientation information that chronologically changes to fixed mesh data corresponding to each of the right-eye and left-eye optical systems 201R and 201L. In the latter case, by properly updating the mesh data based on the chronologically changing orientation information, a VR viewing device can display a VR image correspondingly to the chronological changes in the orientation.

### FOURTH EMBODIMENT

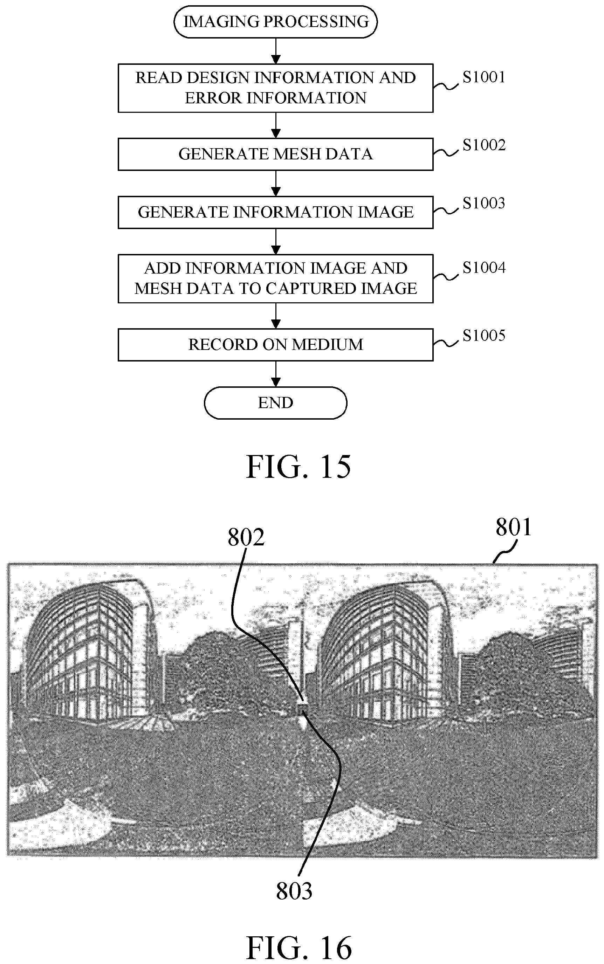

The flowchart in FIG. 15 illustrates imaging processing executed by the image processing unit 113 according to the fourth embodiment. In this embodiment, mesh data and an information image are added to the captured image in imaging processing.

In step S1001, the image processing unit 113 reads design information and manufacturing error information on the imaging lens 200 and the camera body 110 from the lens controller 303 (memory unit 304) and the memory unit 118 of the camera body 110.

Next, in step S1002, the image processing unit 113 generates mesh data based on the design information and the manufacturing error information read in step S1001.

In step S1003, the image processing unit 113 causes the camera controller 117 to generate an information image indicating (including) information including the design information and the manufacturing error information.

Next, in step S1004, the image processing unit 113 generates an image to be recorded, by adding the mesh data and the information image to the captured image.

Subsequently, in step S1005, the image processing unit 113 causes the recording unit 116 to record the image to be recorded on the recording medium.

The captured image read from the camera body 110 can be observed as a VR image with a VR viewing device, and the captured image can be quickly checked. After the quick check, the captured image, especially in a case where the captured image is a moving image, may be subject to fine adjustment on color, brightness, or the like of the image, or may be subject to editing such as an addition of a transition effect for switching between a title and a scene. In this case, metadata may be lost if the image is encoded. In particular, in a case where the captured image is a RAW image and in a case where each frame of a moving image is processed as a still image and then is encoded, metadata is likely to be lost. If the metadata is lost, data of the manufacturing error information is also lost or damaged, making it difficult to generate a VR image afterward. Hence, by recording the information image at the same time as the captured image as in this embodiment, the data of the manufacturing error information is prevented from being lost or damaged during adjustment and editing, which makes it possible to generate a VR image.

The information image generated in the moving image may be subject to compressing processing by various codecs during adjustment and editing. At this time, for example, a two-dimensional barcode as an information image may also be compressed, making it impossible to read the barcode. In order that this is avoided, the information image may be a digit string as illustrated in FIG. 7, which makes it possible to read the information even when the information image is somewhat compressed. Alternatively, an area including the information image may be avoided to be compressed, or only the information image may be cut out and stored before the encoding. These make it possible to generate a VR image even when the metadata is lost.

### FIFTH EMBODIMENT

In the fifth embodiment, a description is given of the use of information images in converted images. FIG. 16 illustrates an example of a converted image 801 after circular fisheye images have been converted into equirectangular projection images. An information image is used in a conversion from a circular fisheye image to a converted image. Thus, in the converted image 801, an object image may be recorded again in an area 802 corresponding to the inclusion areas 406R and 406L of the optical systems illustrated in FIG. 8.

Alternatively, since the area 802 is an unnecessary area when a VR image is displayed, an information image 803 may be saved here. When the information image 802 is remained in the converted image 801, this information image 803 can be used in, for example, processing such that the converted image 801 is converted back to the circular fisheye image.

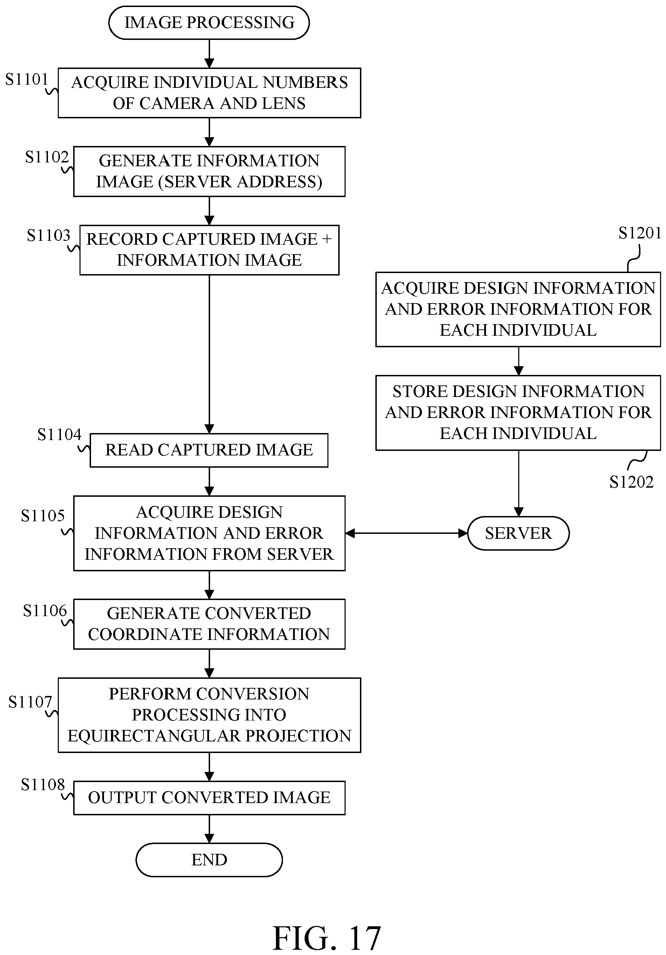

In a case where an information image using a two-dimensional barcode or the like includes address information on a server (external memory apparatus) on the Web or a cloud, it is possible to access the server. The flowchart in FIG. 17 illustrates an example where the camera body 110 (camera controller 117 and image processing unit 113) that has generated a captured image including an information image as illustrated in FIG. 5 or the like accesses a server via the information image, acquires, from the server, information to be used in image converting processing, and performs the image converting processing.

In step S1101, the camera controller 117 that has started imaging acquires individual numbers (serial numbers, etc.) of the camera body 110 and the imaging lens 200 from the camera body 110 and the imaging lens 200.

Next, in step S1102, the camera controller 117 generates an information image including the acquired individual numbers and address information on the server.

Subsequently, in step S1103, the image processing unit 113 generates an image to be recorded by adding the generated information image to the captured image, and records the generated image on the recording medium through the recording unit 116. The information image added to the captured image is basically an initial information image, but may also include orientation information and the other information that chronologically changes.

After that, the image processing unit 113 accesses the server by using the address information in the information image added to the recorded captured image, acquires information from the server, and performs image converting processing using the information acquired from the server.

Specifically, first, in step S1104, the image processing unit 113 reads the captured image to which the information image including the address information is added.

Next, in step S1105, the image processing unit 113 accesses, via the camera controller 117, the server corresponding to the address information included in the information image, and acquires design information and manufacturing error information which correspond to the respective individual numbers of the camera body 110 and the imaging lens 200 from the server. The server has acquired the design information and the manufacturing error information on each individual in manufacturing processes of the camera body 110 and the imaging lens 200 (step S1201), and has stored the acquired information in association with each individual number (step S1202).

Next, in step S1106, the image processing unit 113 generates converted coordinate information based on the design information and the manufacturing error information on the camera body 110 and imaging lens 200 acquired from the server. The converted coordinate information is used so that circular fisheye images in the captured image are converted into equirectangular projection images while a correction is properly performed according to the design information and the manufacturing error information.

Thereafter, in steps S1107 and S1108, the image processing unit 113 performs image conversion by using the converted coordinate information and outputs the converted image as in steps S704 and S705 in FIG. 12.

According to this embodiment, it is possible to generate a good VR image using design information and manufacturing error information stored on a server. Alternatively, for example, an image distribution platform on cloud may be accessible from an information image, and the platform may be caused to perform image conversion on a captured image into a VR image and to distribute (transmit) the VR image without a time lag.

In each of the above-described embodiments, a description is given of the image processing in the case where a two-lens stereo imaging lens is used for imaging. However, similar image processing may be applied in a case of using an imaging lens that is not a stereo imaging lens and can acquire a captured image including an area not including an object image outside the object image, such as a monocular fisheye lens.

According to the above-described embodiments, information on an imaging apparatus used for image processing on a captured image is added as an information image and stored in the imaging apparatus, and thereby the information on the imaging apparatus can be stably stored.

### OTHER EMBODIMENTS

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An image processing apparatus performs processing on a captured image generated by imaging. The image processing apparatus includes an acquiring unit (117), a generating unit (117), and an adding unit (113). The acquiring unit (117) is configured to acquire information on an imaging apparatus used in the imaging. The generating unit (117) is configured to generate an information image as an image including the information on the imaging apparatus. The adding unit (113) is configured to add the information image to the captured image and to record the captured image to which the information image is added.

## Claims

1. An image processing apparatus that performs processing on a captured image generated by imaging, the image processing apparatus comprising:
an acquiring unit (117) configured to acquire information on an imaging apparatus (100) used in the imaging;
a generating unit (117) configured to generate an information image as an image including the information on the imaging apparatus (100); and
an adding unit (113) configured to add the information image to the captured image and to record the captured image to which the information image is added.

2. The image processing apparatus according to claim 1, wherein the information image is a barcode, a digit string, or luminance information corresponding to a recorded bit number of the captured image.

3. The image processing apparatus according to claim 1 or 2, wherein the information on the imaging apparatus (100) includes at least one of (i) design information on the imaging apparatus (100), (ii) information on an image sensor (111) of the imaging apparatus (100), and (iii) manufacturing error information on the imaging apparatus (100).

4. The image processing apparatus according to any one of claims 1 to 3, wherein the information on the imaging apparatus (100) includes address information for acquiring, by communication with an external memory apparatus, at least one of (i) design information on the imaging apparatus (100), (ii) information on an image sensor (111) of the imaging apparatus (100), (iii) manufacturing error information on the imaging apparatus (100).

5. The image processing apparatus according to any one of claims 1 to 4, wherein information on the imaging apparatus (100) includes at least one of (i) temperature information on the imaging apparatus (100), (ii) focus position information on the imaging apparatus (100), and (iii) orientation information on the imaging apparatus (100)

6. The image processing apparatus according to any one of claims 1 to 5, wherein the adding unit (113) adds as the information image, to the captured image, (i) a first information image (501, 502, 504, 506, 508) including information at a start of the imaging among the information on the imaging apparatus (100), and (ii) a second information image (501, 503, 505, 507, 509) including information changed after the start of the imaging among the information on the imaging apparatus (100).

7. The image processing apparatus according to any one of claims 1 to 6, wherein the captured image includes a first area (402, 403, 404) including an object image and a second area (405) not including the object image, and
wherein the adding unit (113) adds the information image to the second area (405).

8. The image processing apparatus according to any one of claims 1 to 7, wherein in a case where the captured image is a frame image of a moving image, the generating unit (117) updates the information image every unit frame or every time the information on the imaging apparatus (100) changes, and the adding unit (113) adds the updated information image to a corresponding frame image.

9. The image processing apparatus according to any one of claims 1 to 8, wherein the imaging apparatus (100) includes:
an imaging lens (200); and
a camera body (110) that includes an image sensor (111) and to which the imaging lens (200) is detachably attached, and
wherein the acquiring unit (117) acquires the information on the imaging apparatus (100) from each of the imaging lens (200) and the camera body (110).

10. The image processing apparatus according to any one of claims 1 to 9, wherein the imaging apparatus (100) includes a circular fisheye lens as the imaging lens (200).

11. The image processing apparatus according to any one of claims 1 to 10, comprising a processing unit (113) configured to acquire the information on the imaging apparatus (100) from the information image added to the recorded captured image and to perform image processing on the captured image by using the information on the imaging apparatus (100).

12. The image processing apparatus according to claim 11, wherein the processing unit (113) does not perform the image processing on an area to which the information image is added in the captured image and performs the image processing on an object image in the captured image.

13. The image processing apparatus according to claim 11 or 12, wherein an imaging lens (200) of the imaging apparatus (100) includes two optical systems (201R, 201L) arranged in parallel to each other, and
wherein the processing unit (113) performs the image processing on an object image in the captured image, wherein the object image has been acquired via each of the two optical systems (201R, 201L).

14. An imaging apparatus (100) comprising:
the image processing apparatus according to any one of claims 1 to 13; and
an image sensor (111) configured to capture an object image formed by an imaging lens (200).

15. An image processing method that performs processing on a captured image generated by imaging, the image processing method comprising:
acquiring information on an imaging apparatus (100) used in the imaging;
generating an information image as an image including the information on the imaging apparatus (100); and
adding the information image to the captured image and to record the captured image to which the information image is added.

16. A computer program that causes a computer to execute a control method according to claim 15.
